# EUROPÄISCHE PATENTANMELDUNG

(11) **EP 1 772 340 A2**
(43) Veröffentlichungstag der Anmeldung: **11.04.2007**
(21) Anmeldenummer: 06020800.6
(22) Anmeldetag: 04.10.2006
(51) Int. Cl.: B61D 17/18, B60R 13/02

(54) **Innendeckenausbaumodul für Deckenbereiche von Fahrzeugen, insbesondere Schienenfahrzeug für den Personenverkehr**

(30) Priorität: 08.10.2005 DE 102005048289
(71) Anmelder: Maschinenbau und Service GmbH Ammendorf, 06132 Halle (DE)
(72) Erfinder: Albrecht, Uwe, 06118 Halle (DE)

(57) **Zusammenfassung**

Die Erfindung betrifft einen Innenausbaumodul für Deckenbereiche von Fahrzeugen, insbesondere Schienenfahrzeug für den Personenverkehr, im wesentlichen aufweisend einen Grundrahmen, der an geeigneten Tragelementen im Dachbereich festgelegt und zur Befestigung von Teilen der Innendeckenverkleidung sowie von Baugruppenteilen, wie von der Beleuchtung, geeignet ist, wobei der Grundrahmen als ein Adapterrahmen (2) mit an die jeweiligen Tragelemente (6) anpassbaren Anschlagmitteln (3) ausgebildet ist und dem ein schwenkbar befestigter Deckentragrahmen (4) zugeordnet ist, der die sich über die nahezu gesamte Fahrzeugbreite erstreckende Innendeckenverkleidung (9) trägt, wobei die Innendeckenverkleidung (9) aus einem mittleren Teil (9.1) und mindestens zwei Endteilen (9.2) besteht.

## Beschreibung

Die vorliegende Erfindung bezieht sich auf einen Innenausbaumodul für Deckenbereiche von Fahrzeugen, insbesondere Schienenfahrzeug für den Personenverkehr, im wesentlichen aufweisend einen Grundrahmen, der an geeigneten Tragelementen im Dachbereich festgelegt und zur Befestigung von Teilen der Innendeckenverkleidung sowie von Baugruppenteilen, wie von der Beleuchtung, geeignet ist.

Grundsätzlich ist es seit langem bekannt, die Innendeckenverkleidung von Schienenfahrzeugen zu segmentieren, die Einzelsegmente nebeneinander im Deckenbereich zu positionieren und an geeigneten Tragelementen im Dachbereich, welche auch Funktionsbaugruppen, wie ein Luftkanal, sein können, zu befestigen, siehe hierzu beispielsweise die DE-OS 29 27 640 oder die DD 231 320 A1. Dass in diesem Zusammenhang ein mittleres Deckensegment zumeist auch klapp- oder schwenkbar befestigt ist, resultiert aus der Notwendigkeit, den Luftkanal zugänglich zu gestalten und/oder zumeist auch dort eingebaute Leuchtmittel relativ einfach warten zu können.

Solche Lösungen weisen aber die entscheidenden Nachteile auf, dass die Befestigungen der Einzelsegmente im Dachbereich des Schienenfahrzeuges außerordentlich kompliziert ausgebildet und, insbesondere bei auftretenden Toleranzproblemen durch erforderliche Richt- und Justierarbeiten, auch sehr aufwändig ist. Dass in diesem Zusammenhang alle Aktivitäten in so genannter Überkopfarbeit verrichtet werden müssen, verkompliziert die Anwendung dieser Lösungen in der Praxis zusätzlich.

Zumindest der zuletzt genannte Nachteil soll durch Lösungen, wie in der

DE 43 00 714 C2 beschrieben, dadurch beseitigt werden, indem eine Innendecke über einem Einstiegsraum eines Schienenfahrzeuges in der Art einer Kassettendecke aus mehreren schwenkbar angeordneten modularen Deckenelementen gebildet wird.

Zur Befestigung dieser modularen Deckenelemente wird in den freien Deckenbereich ein kompliziertes, mehrfach geschlossenes Trägersystem eingebaut, welches vorrangig an den den Einstiegsraum begrenzenden Trennwänden festgelegt ist und zur Befestigung der einzelnen Deckenelemente geeignet sein muss. Die innerhalb des Trägersystems verwendeten Profilträger legen zwar ein Grundmaß zur Positionierung der modularen Deckenelemente fest und wirken wie ein der jeweiligen Kassette zugeordneter Grundrahmen, sind aber auch ursächlich für ein sehr hohes Maß an individuellen Arbeiten, auch Anpassarbeiten, im Fahrzeug und für das Untergehen der Vorteile der modularen Fertigung des Deckensystems.

Bei anderen Lösungen für Innenausbaumodule für Reisezugwagen, wie nach der DE 198 60 557 C1, wird der Innenausbau abgeschlossen, indem sich über die gesamte Wagenkastenbreite erstreckende vorgefertigte Deckensegmente vom Wagenübergang her - wie auch immer - eingeschoben und montiert werden.

Solche Lösungen versprechen zwar, bei einer kaum zu realisierenden maßgenauen Fertigung des Wagenkastens, einen relativ einfachen Abschluss des Innenausbaus, lassen aber die Notwendigkeit von Reparatur- oder Wartungsarbeiten im Decken- oder Dachbereich des Fahrzeuges außer Betracht.

Alle vorbeschriebenen bekannten Lösungen weisen aber gemeinsam die entscheidenden Nachteile auf, dass sie durch ihre zweckgebundene und fahrzeugspezifische Konzipierung nur innerhalb eines vorbestimmten und konkreten Fahrzeugkonzepts einsetzbar sind oder nur mit einem unvertretbaren Aufwand für andere Fahrzeugkonzepte angepasst werden können, und dass sie die eigentlichen Vorteile einer Modulbauweise nur ansatzweise verwirklichen.

Vor diesem Hintergrund liegt der vorliegenden Erfindung die Aufgabe zugrunde, einen Innenausbaumodul für Deckenbereiche von Fahrzeugen, insbesondere Schienenfahrzeug für den Personenverkehr, zur Verfügung zu stellen, welches nahezu komplett vorgefertigt und für verschiedene Fahrzeugkonzepte sowohl hinsichtlich der Befestigung als auch der jeweiligen Fahrzeuginnendeckenkontur und -breite relativ einfach angepasst werden kann, wobei eine unkomplizierte Montage und danach für Reparatur- oder Wartungsarbeiten auch eine leichte Zugänglichkeit zum Decken- und/oder Dachbereich des Fahrzeuges gewährleistet sein soll.

Erfindungsgemäß wird die Aufgabe gelöst, indem der Grundrahmen des Innenausbaumoduls als ein Adapterrahmen mit an die jeweiligen Tragelemente anpassbaren Anschlagmitteln ausgebildet ist und dem ein schwenkbar befestigter Deckentragrahmen zugeordnet ist, der die sich über die nahezu gesamte Fahrzeugbreite erstreckende Innendeckenverkleidung trägt, wobei die Innendeckenverkleidung aus einem mittleren Teil und mindestens zwei Endteilen besteht.

Es hat sich in umfangreichen Untersuchungen gezeigt, dass die Dachbereiche einer Vielzahl von Fahrzeugkonzepten unterschiedliche Tragelemente aufweisen, die sich aber - auch unter Berücksichtigung ihrer Belastbarkeit - grundsätzlich zur Befestigung von Innendeckenverkleidungen eignen. Während normaler Weise jeder Innendeckenverkleidung aufwändige und den jeweiligen speziellen Tragelementen entsprechende Befestigungskonstruktionen zugeordnet sind, wird nach der erfindungsgemäßen Lösung ein Adapterrahmen vorgeschlagen, der grundsätzlich konstruktiv unverändert bleibt, aber durch den jeweiligen Tragelementen angepasste Anschlagmittel sich zur Anwendung innerhalb vieler Fahrzeugkonzepte eignet.

Diese Anschlagmittel können in beliebiger geeigneter Weise gestaltet sein. Bevorzugt sind sie lösbar mit dem Adapterrahmen verbunden und konsolen-, flansch- oder tragarmartig ausgebildet, um baukastenartig der jeweiligen Tragelementenkonstruktion und -anordnung, insbesondere hinsichtlich der Befestigung des Adapterrahmens, entsprechen zu können.

Außerdem können die Anschlagmittel zur- aus der Fahrzeugfertigung resultierenden - toleranzausgleichenden und lösbaren Befestigung an den Tragelementen ausgebildet sein. Unter dem Aspekt einer möglichst einfachen aber funktionsgerechten Ausgestaltung weisen deshalb die Anschlagmittel vorzugsweise langlochähnliche Ausnehmungen dort auf, wo mittels Schraubverbindungen ein Festlegen an den Tragelementen und/oder am Adapterrahmen vorgesehen ist. Es versteht sich, dass sich in diesem Zusammenhang auch andere technische Möglichkeiten anbieten, beispielsweise die Anschlagmittel teleskopartig auszubilden, was aber letztendlich mit einem nicht unerheblichen und zumeist auch unnötigen Kostenaufwand verbunden ist.

Nach einem weiteren tragenden Merkmal der erfindungsgemäßen Lösung ist am Adapterrahmen ein Deckentragrahmen schwenkbar befestigt, wobei die konkrete Position des Deckentragrahmens zum Adapterrahmen in beliebiger Weise festgelegt werden kann. Vorzugsweise ist der eine quadratische oder rechteckige Grundform aufweisende Deckentragrahmen zumindest überwiegend von dem eine in etwa a-däquate Grundform aufweisenden Adapterrahmen umschlossen, was sich insbesondere hinsichtlich der Bauhöhe des Innenausbaumoduls günstig auswirkt. Außerdem lassen sich bei dieser vorteilhaften Variante die ebenfalls erfindungsgemäß vorgeschlagenen Sicherungsmittel für den Deckentragrahmen, wie Verschraubungen, Sicherungshaken und/oder Fangbänder, sowohl günstig und in einfacher Weise anordnen als auch im Bedarfsfall bedienen, wobei insbesondere die Sicherungshaken und/oder Fangbänder dann von besonderer Bedeutung sind, wenn der Deckentragrahmen im montierten Zustand des Innenausbaumoduls zum Zwecke der Durchführung von Wartungs- oder Reparaturarbeiten im Dachbereich des Fahrzeuges mittels seiner Schwenkachse in eine geöffnete Stellung - also in eine nahezu senkrechte, an seiner Schwenkachse am Adapterrahmen hängende Stellung - verbracht werden soll.

Die am Deckentragrahmen in geeigneter Weise befestigte Innendeckenverkleidung, welche sich in vorteilhafter Weise über die gesamte Fahrzeugbreite erstreckt, besteht aus einem mittleren Teil und bevorzugt aus zwei Endteilen. Die Innendeckenverkleidung ist sowohl hinsichtlich ihrer Gestaltung, insbesondere unter dem Aspekt gewünschter und/oder erforderlicher Innendeckenkonturen, als auch hinsichtlich vorgegebener Fahrzeugbreiten variabel und anpassbar gestaltbar. Letzteres sollte, nach einer weiteren vorteilhaften Variante des erfindungsgemäßen Innenausbaumoduls, durch entsprechende konstruktive Gestaltungen und Anpassungen vorrangig der Endteile realisiert werden, da sich hier der erforderliche Aufwand zumeist als am geringsten zeigt.

Um insbesondere alle Sichtflächen der Innendeckenverkleidung beim Transport des erfindungsgemäßen Innenausbaumoduls und/oder bei dessen Ein- oder Ausbau und/oder bei erforderlichen Wartungs- oder Reparaturarbeiten im Dachbereich des Fahrzeuges optimal zu schützen, wird nach der Erfindung vorgeschlagen, die Endteile der Innendeckenverkleidung in ihrer Position zum mittleren Teil um nahezu 180° verstellbar auszubilden.

Dazu ist vorzugsweise vorgesehen, die Endteile der Innendeckenverkleidung flügelartig und mittels einer geeigneten gelenkigen Verbindung schwenkbar am Deckentragrahmen zu befestigen und derart auszubilden, dass sie in einer vollständig geöffneten Endstellung vor dem mittleren Teils der Innendeckenverkleidung positioniert werden können und mit ihren Sichtflächen dessen Sichtfläche zumindest großflächig überdecken. Andere Varianten, wie die Endteile der Innendeckenverkleidung steck-, klemm- oder verschraubbar am Deckentragrahmen zu befestigen, können zwar bei Erreichung vergleichbarer Wirkungen ebenfalls umgesetzt werden, sind letztendlich aber aufwändiger.

In jedem Fall sollte vorgesehen werden, dass die freien Endbereiche der Endteile der Innendeckenverkleidung im montierten Zustand des Innenausbaumoduls in geeigneter Weise festgelegt sind, wozu sich insbesondere die Vouten-, Seitenwand- oder Türbereiche des Fahrzeuges eignen.

Einer weiteren bevorzugten Variante des erfindungsgemäßen Innenausbaumoduls folgend, ist der mittlere Teil der Innendeckenverkleidung zumindest teilweise separat klapp- oder schwenkbar ausgebildet, was sich in den Fällen, wenn der mittlere Teil der Innendeckenverkleidung Aufnahmen für ein Leuchtenband und/oder für andere Leuchtmittel aufweist, dann besonders günstig auswirkt, wenn diese gewartet werden müssen. Denkbar ist in diesem Zusammenhang auch, lediglich das Leuchtenband und/oder die Leuchtmittel klapp- oder schwenkbar anzuordnen.

Um insbesondere günstige Platzverhältnisse bei erforderlichen Wartungs- oder Reparaturarbeiten im Dachbereich des Fahrzeuges zu erreichen, ist vorzugsweise vorgesehen, die Schwenkachse des Deckentragrahmens quer zur Fahrzeuglängsachse des Fahrzeuges am Adapterrahmen festzulegen, was insbesondere dann günstige Auswirkungen zeigt, wenn das erfindungsgemäße Innenausbaumodul dem Einstiegsbereich eines Schienenfahrzeuges zugeordnet ist. In diesem Fall steht der gesamte Einstiegsbereich zwischen den zumeist sich gegenüberliegenden Einstiegstüren dem Wartungspersonal, auch zum Aufstellen von Leitern oder anderen Steighilfen, oder zum Befahren mit geeigneten Hebemitteln, beim Ein- oder Ausbau des erfindungsgemäßen Innenausbaumoduls vom Fahrzeuginneren her, uneingeschränkt zur Verfügung.

Um einen Einsatz der zuvor erwähnten Hebemittel, auch aus sicherheitstechnischen Gründen, zu ermöglichen, ist der Adapterrahmen mit Hebeanschlagmitteln, wie Arretierhilfen für die Gabeln eines Staplers, ausgebildet, wobei nach einer bevorzugten Variante der erfindungsgemäßen Lösung der Adapterrahmen Krananschlagmittel, zum Ein- oder Ausbau des Innenausbaumoduls durch eine Dachöffnung des Fahrzeuges, also von oben, aufweist.

Die vorliegende Erfindung betrifft weiterhin ein Schienenfahrzeug für den Personenverkehr mit einem erfindungsgemäßen Innenausbaumodul.

Weitere bevorzugte Ausgestaltungen der Erfindung ergeben sich aus den Unteransprüchen.

Die wesentlichen Vorteile der erfindungsgemäßen Lösung bestehen insbesondere nicht nur darin, dass ein vollständig vorgefertigtes Innenausbaumodul einbaufertig zur Verfügung steht. Vielmehr können beim Transport des erfindungsgemäßen Innenausbaumoduls und/oder bei dessen Ein- oder Ausbau und/oder bei erforderlichen Wartungs- oder Reparaturarbeiten im Dachbereich des Fahrzeuges auch alle Sichtflächen der Innendeckenverkleidung optimal geschützt werden und mittels des Adapterrahmens sowie der möglichen Variabilität seiner Anschlagmittel und/oder der Gestaltung der Innendeckenverkleidung eignet sich das Innenausbaumodul zur Anwendung bei nahezu allen bekannten Schienenfahrzeugen für den Personenverkehr.

Ein vorteilhaftes Ausführungsbeispiel der Erfindung ist nachstehend anhand der Zeichnungen veranschaulicht.

Es zeigen
- Fig. 1 -: eine schematische Darstellung einer bevorzugten Ausführungsform des erfindungsgemäßen Innenausbaumoduls im eingebauten Zustand mit angedeutetem Leuchtenband
- Fig. 2 -: eine schematische Darstellung des Innenausbaumoduls nach Fig. 1 mit teilweise geöffneten Endteilen der Innendeckenverkleidung
- Fig. 3 -: eine schematische Darstellung des Innenausbaumoduls nach Fig. 1 mit vollständig geöffneten Endteilen der Innendeckenverkleidung
- Fig. 4 -: eine schematische Darstellung des Innenausbaumoduls nach Fig. 1 mit aufgeklapptem Deckentragrahmen

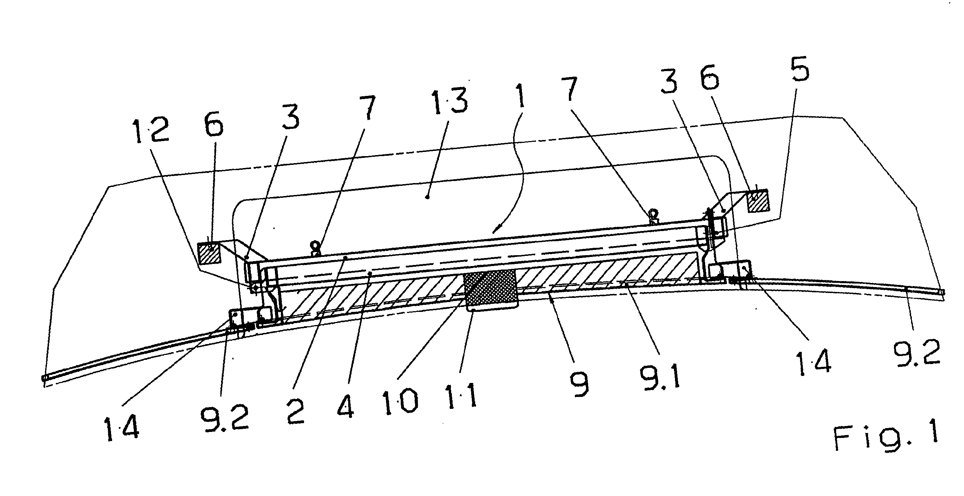

Fig. 1 zeigt eine schematische Darstellung einer bevorzugten Ausführungsform des erfindungsgemäßen Innenausbaumoduls 1 für Deckenbereiche im eingebauten Zustand mit angedeutetem Leuchtenband 11, wobei aus Gründen einer vereinfachten und übersichtlicheren Erkennbarkeit in den anderen Figuren sowohl auf eine erneute Darstellung der Aufnahme 10 für das Leuchtenband 11 als auch auf das Leuchtenband 11 selbst verzichtet wurde.

Deutlich ist zu erkennen, dass der Adapterrahmen 2 im vorliegenden Fall konsolenartig ausgebildete Anschlagmittel 3 aufweist, die mit den im Dachbereich 13 des Schienenfahrzeuges vorhandenen trägerartigen Tragelementen 6 verschraubt sind. Sollten in einem anderen Anwendungsfall die Tragelemente 6 eine andere Form und/oder eine andere Anordnung aufweisen, dann können die Anschlagmittel 3 des Adapterrahmens 2 auch flansch- oder tragarmartig ausgebildet und so den jeweils vorhandenen Gegebenheiten angepasst werden.

Nicht näher dargestellt wurden die langlochähnlichen Ausnehmungen in den Anschlagmitteln 3 überall dort, wo mittels Schraubverbindungen ein toleranzausgleichendes Festlegen des Adapterrahmens 2 an den Tragelementen 6 vorgesehen ist. Im vorliegenden Fall sind die Anschlagmittel 3 andererseits am Adapterrahmen 2 angeschweißt, aber auch dort sind Schraubverbindungen mit oder ohne langlochähnlichen Ausnehmungen vorstellbar.

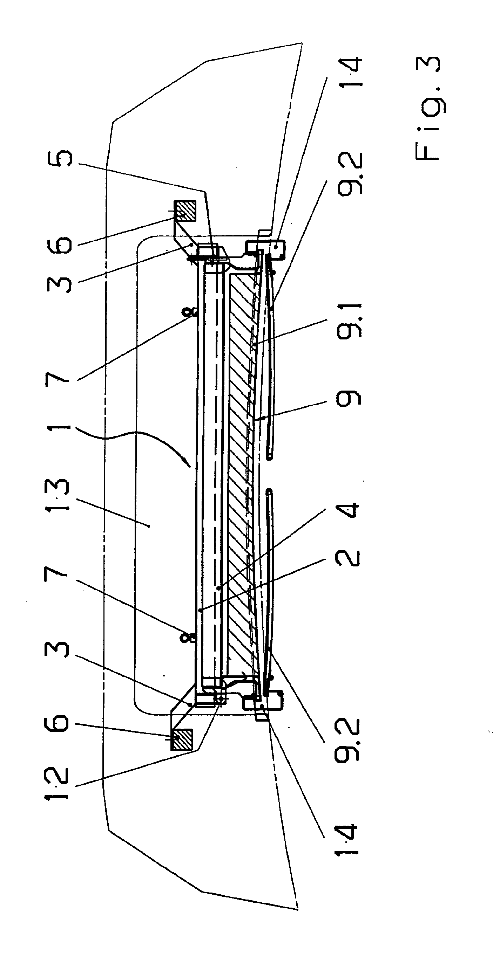

Der deutlich erkennbare Deckentragrahmen 4 ist am Adapterrahmen 2 mittels seiner Schwenkachse 12 schwenkbar befestigt und trägt die sich über die nahezu gesamte Fahrzeugbreite erstreckende Innendeckenverkleidung 9, die aus einem mittleren Teil 9.1 und bevorzugt aus zwei Endteilen 9.2 besteht. Dabei sind die Endteile 9.2 der Innendeckenverkleidung 9 in ihrer Position zum mittleren Teil 9.1 um nahezu 180° verstellbar ausgebildet, was insbesondere in Fig. 3 gezeigt ist und an späterer Stelle ausführlicher erläutert wird.

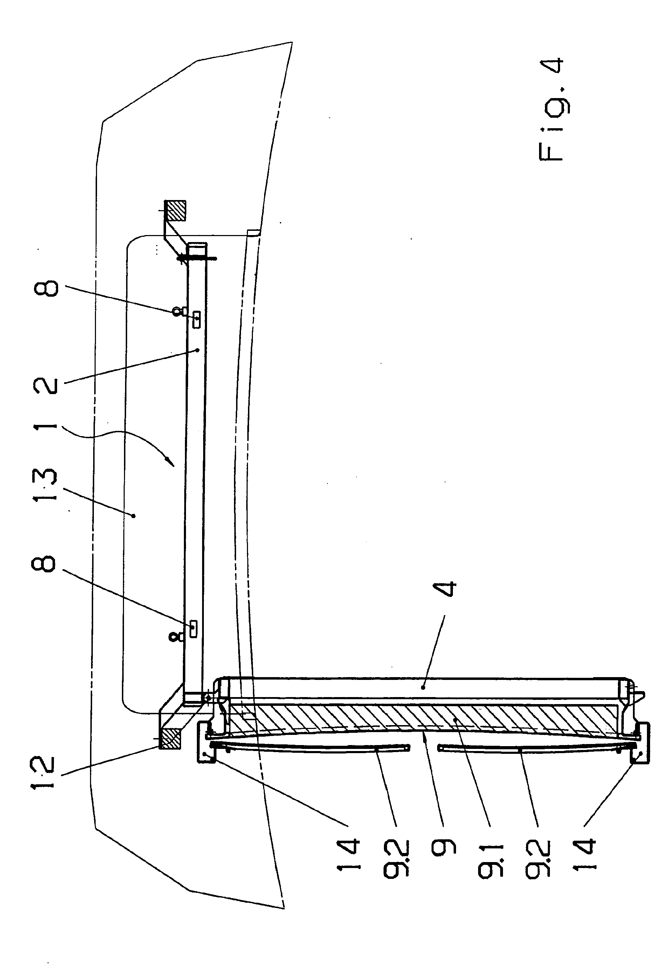

Zumindest an der der Schwenkachse 12 gegenüberliegenden Seite des Deckentragrahmens 4 ist dieser im eingebauten Zustand mittels Sicherungsmitteln 5, hier mittels Verschraubungen, sicher am Adapterrahmen 2 festgelegt. Für den Fall, dass wie in Fig. 4 dargestellt, der Deckentragrahmen 4 aufgeklappt werden soll, sind zusätzliche - aber nicht dargestellte - Sicherungsmittel 5, vorzugsweise Sicherungshaken oder Fangbänder, vorgesehen, um während des Lösens der Verschraubungen ein ungewolltes Aufklappen des Deckentragrahmens 4, mit Beschädigungen zumindest der Innendeckenverkleidung 9 und/oder möglichen Verletzungen des Bedienpersonals, sicher auszuschließen.

Nach einer bevorzugten Ausführungsform der erfindungsgemäßen Lösung ist nur die Abdeckung des in Fig. 1 dargestellten Leuchtenbandes 11 klapp- oder schwenkbar ausgebildet, insbesondere um im Bedarfsfall relativ leicht das oder die Leuchtmittel wechseln zu können. Bei anderen Varianten des erfindungsgemäßen Innenausbaumoduls 1 mit besonders guter Zugänglichkeit insbesondere zu den elektrischen Zuleitungen und/oder zu den Befestigungen der Leuchtmittelsockel kann der mittlere Teil 9.1 der Innendeckenverkleidung 9 zumindest teilweise, aber auch insgesamt, separat klapp- oder schwenkbar ausgebildet sein.

Die Anordnung des erfindungsgemäßen Innenausbaumoduls 1 im Deckenbereich des Fahrzeuges ist entscheidend dafür, in welchen Bereichen die freien Endbereiche der Endteile 9.2 der Innendeckenverkleidung 9 in geeigneter Weise festgelegt werden. Ist das Innenausbaumoduls 1 zwischen den Einstiegsbereichen des Fahrzeuges angeordnet, sind diese freien Endbereiche der Endteile 9.2 vorzugsweise im Vouten- oder Seitenwandbereich festgelegt, ist es aber innerhalb des Einstiegsbereiches des Fahrzeuges angeordnet, so bietet sich das Festlegen dieser freien Endbereiche der Endteile 9.2 oberhalb der Türbereiche an.

Um während des Transports und/oder auch während der Montage - oder in erforderlichen Fällen auch während der Demontage - des erfindungsgemäßen Innenausbaumoduls 1 einen sicheren Schutz der Sichtflächen der Innendeckenverkleidung 9 zu erreichen, sind die Endteile 9.2 der Innendeckenverkleidung 9 in ihrer Position zum mittleren Teil 9.1 um nahezu 180° verstellbar ausgebildet. Nach einer bevorzugten und in den Zeichnungen dargestellten Ausführungsform sind diese Endteile 9.2 flügelartig und schwenkbar am Deckentragrahmen 4 befestigt und überdecken im Transport- oder Montagezustand des Innenausbaumoduls 1 den mittleren Teil 9.1 der Innendeckenverkleidung (9) zumindest großflächig, siehe hierzu insbesondere Fig. 3. Mit dem Ziel des Erreichens einfacher Schwenkbewegungen und eines gewissen Festlegens der Endteile 9.2 in den jeweiligen Endstellungen werden im vorliegenden Fall geeignete Schwenkrastmechanismen 14 vorgeschlagen, wodurch nach dieser beschriebenen und bevorzugten Ausführungsform zugleich und zusätzlich auch der Verlust loser Teile während des Transports oder der Montage des Innenausbaumoduls 1 ausgeschlossen ist und ein einfacher, montagefreundlicher Abschluss der Innendeckenverkleidung 9 über die gesamte Fahrzeugbreite, also grundsätzlich von Seitenwand zu Seitenwand des Fahrzeuges, erreicht wird.

Nimmt man unter anderem den möglichen Verlust loser Teile, hier insbesondere der Endteile 9.2 und/oder der Befestigungsmittel, in Kauf, dann können die Endteile 9.2 der Innendeckenverkleidung 9 auch steck-, klemm- oder verschraubbar am Deckentragrahmen 4 befestigt werden. Damit im Transport- oder Montagezustand des Innenausbaumoduls 1 der mittlere Teil 9.1 der Innendeckenverkleidung 9 zumindest großflächig überdeckt werden kann, sind die Endteile 9.2 in diesem Fall als lose Teile entsprechend zu positionieren und zu befestigen, um die Endteile 9.2 nach der Montage des erfindungsgemäßen Innenausbaumoduls 1 bestimmungsgemäß anzuordnen und wiederum zu stecken, zu klemmen oder zu verschrauben.

Nach einer weiteren bevorzugten Variante der Erfindung wird das Innenausbaumodul 1 in vorteilhafter Weise durch eine Dachöffnung des Fahrzeuges montiert. Dazu weist der Adapterrahmen 2 Krananschlagmittel 7 auf. Aber auch eine Montage des Innenausbaumoduls 1 vom Fahrzeuginneren her, beispielsweise mittels eines Gabelstaplers, ist möglich. Für diesen Fall ist der Adapterrahmen 2 mit Hebeanschlagmitteln 8, wie Ausnehmungen für die sichere Aufnahme der Gabeln des Staplers, ausgebildet, wie insbesondere die Fig. 4 zeigt.

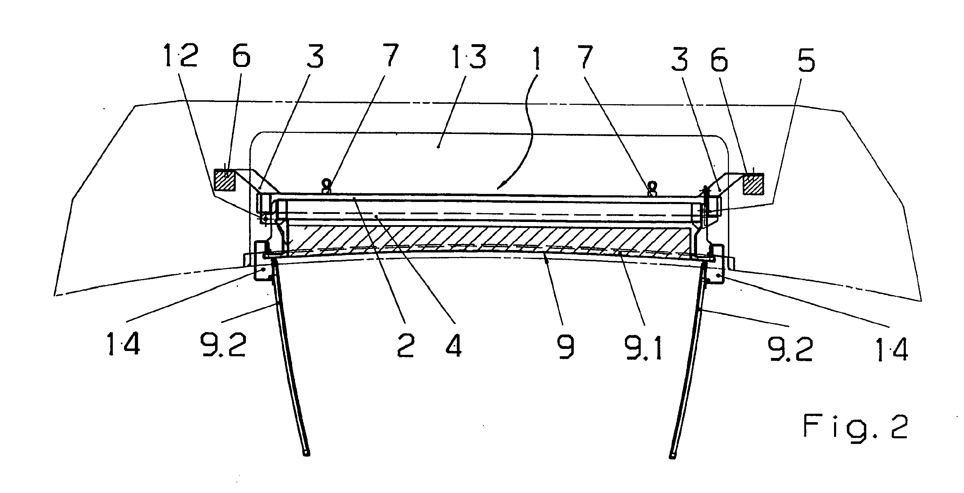

In Fig. 2 ist eine schematische Darstellung des Innenausbaumoduls 1 mit teilweise geöffneten Endteilen 9.2 der Innendeckenverkleidung 9 dargestellt. Die Endteile 9.2 sind mittels ihrer Schwenkrastmechanismen 14 in eine nahezu senkrechte Position verbracht wurden, so dass sowohl der Zugang zu den Sicherungsmitteln 5 des Adapterrahmens 2 als auch zum Voutenbereich im Dach des Fahrzeuges ermöglicht ist.

Fig. 3 zeigt eine schematische Darstellung des Innenausbaumoduls 1 mit vollständig geöffneten Endteilen 9.2 der Innendeckenverkleidung 9, wobei deutlich zu erkennen ist, dass die Endteile 9.2 den mittleren Teil 9.1 der Innendeckenverkleidung 9 fast vollständig überdecken und somit alle Sichtflächen der Innendeckenverkleidung 9 geschützt sind. Diese Position der Endteile 9.2 sollte eingenommen sein zum Transport und/oder zur Montage des erfindungsgemäßen Innenausbaumoduls 1 durch eine Dachöffnung des Fahrzeuges oder wenn, wie in Fig. 4 dargestellt, der Deckentragrahmen 4 aufgeklappt ist und, an seiner Schwenkachse 12 hängend, eine nahezu senkrechte Position eingenommen hat. In diesem Fall könnte das Innenausbaumodul 1 vom Fahrzeuginneren her eingebaut und an den im Dachbereich 13 vorhandenen Tragelementen 6 festgelegt werden oder der gesamte Dachbereich 13 wäre zugänglich für Wartungs- und/oder Reparaturarbeiten von dort angeordneten Funktionsbaugruppen oder -teilen des Fahrzeuges.

Dabei versteht sich, dass der grundsätzliche Erfindungsgedanke nicht an die in diesem Ausführungsbeispiel dargestellten Einzelheiten gebunden ist.

## Patentansprüche

1. Innenausbaumodul für Deckenbereiche von Fahrzeugen, insbesondere Schienenfahrzeug für den Personenverkehr, im wesentlichen aufweisend einen Grundrahmen, der an geeigneten Tragelementen im Dachbereich festgelegt und zur Befestigung von Teilen der Innendeckenverkleidung sowie von Baugruppenteilen, wie von der Beleuchtung, geeignet ist, **dadurch gekennzeichnet, dass** der Grundrahmen als ein Adapterrahmen (2) mit an die jeweiligen Tragelemente (6) anpassbaren Anschlagmitteln (3) ausgebildet ist und dem ein schwenkbar befestigter Deckentragrahmen (4) zugeordnet ist, der die sich über die nahezu gesamte Fahrzeugbreite erstreckende Innendeckenverkleidung (9) trägt, wobei die Innendeckenverkleidung (9) aus einem mittleren Teil (9.1) und mindestens zwei Endteilen (9.2) besteht.

2. Innenausbaumodul nach Anspruch 1, **dadurch gekennzeichnet, dass** die Endteile (9.2) der Innendeckenverkleidung (9) in ihrer Position zum mittleren Teil (9.1) um nahezu 180° verstellbar ausgebildet sind.

3. Innenausbaumodul nach Anspruch 1 und 2, **dadurch gekennzeichnet, dass** die Endteile (9.2) der Innendeckenverkleidung (9) flügelartig und schwenkbar am Deckentragrahmen (4) befestigt sind und im Transport- oder Montagezustand des Innenausbaumoduls (1) den mittleren Teil (9.1) der Innendeckenverkleidung (9) zumindest großflächig überdeckend ausgebildet sind.

4. Innenausbaumodul nach Anspruch 1 und 2, **dadurch gekennzeichnet, dass** die Endteile (9.2) der Innendeckenverkleidung (9) steck-, klemm- oder verschraubbar am Deckentragrahmen (4) befestigt sind und im Transport- oder Montagezustand des Innenausbaumoduls (1) den mittleren Teil (9.1) der Innendeckenverkleidung (9) zumindest großflächig überdeckend ausgebildet sind.

5. Innenausbaumodul nach einem der Ansprüche 1 bis 4, **dadurch gekennzeichnet, dass** der mittlere Teil (9.1) der Innendeckenverkleidung (9) zumindest teilweise separat klapp- oder schwenkbar ausgebildet ist.

6. Innenausbaumodul nach einem der Ansprüche 1 bis 5, **dadurch gekennzeichnet, dass** der mittlere Teil (9.1) der Innendeckenverkleidung (9) mit Aufnahmen (10) für zumindest einen Teil eines Leuchtenbandes (11) und/oder für andere Leuchtmittel ausgebildet ist.

7. Innenausbaumodul nach einem der Ansprüche 1 bis 6, **dadurch gekennzeichnet, dass** der Deckentragrahmen (4) quer zur Fahrzeuglängsachse schwenkbar am Adapterrahmen (2) befestigt und mit Sicherungsmitteln (5), wie Verschraubungen, Sicherungshaken oder Fangbändern, ausgebildet ist.

8. Innenausbaumodul nach einem der Ansprüche 1 bis 7, **dadurch gekennzeichnet, dass** die freien Endbereiche der Endteile (9.2) der Innendeckenverkleidung (9) im eingebauten Zustand im Vouten-, Seitenwand- oder oberhalb des Türbereiches des Fahrzeuges festgelegt sind.

9. Innenausbaumodul nach einem der Ansprüche 1 bis 8, **dadurch gekennzeichnet, dass** die Anschlagmittel (3) des Adapterrahmens (2) konsolen-, flansch- oder tragarmartig ausgebildet sind.

10. Innenausbaumodul nach einem der Ansprüche 1 bis 9, **dadurch gekennzeichnet, dass** die Anschlagmittel (3) des Adapterrahmens (2) teleskopartig und/oder mit langlochähnlichen Ausnehmungen, zur toleranzausgleichenden und lösbaren Befestigung an den Tragelementen (6), ausgebildet sind.

11. Innenausbaumodul nach einem der Ansprüche 1 bis 10, **dadurch gekennzeichnet, dass** die Anschlagmittel (3) lösbar mit dem Adapterrahmen (2) verbunden sind.

12. Innenausbaumodul nach einem der Ansprüche 1 bis 11, **dadurch gekennzeichnet, dass** der Adapterrahmen (2) mit Krananschlagmitteln (7), zum Ein- oder Ausbau des Innenausbaumoduls (1) durch eine Dachöffnung des Fahrzeuges, ausgebildet ist

13. Innenausbaumodul nach einem der Ansprüche 1 bis 12, **dadurch gekennzeichnet, dass** der Adapterrahmen (2) mit Hebeanschlagmitteln (8), zum Ein- oder Ausbau des Innenausbaumoduls (1) vom Fahrzeuginneren her, ausgebildet ist.

14. Innenausbaumodul nach einem der Ansprüche 1 bis 13, **dadurch gekennzeichnet, dass** das Innenausbaumodul (1) dem Einstiegsbereich eines Schienenfahrzeuges zugeordnet ist.

15. Schienenfahrzeug für den Personenverkehr mit einem Innenausbaumodul (1) nach einem der vorhergehenden Ansprüche.
